# EUROPÄISCHE PATENTSCHRIFT

(11) **EP 1 045 537 B1**
(45) Veröffentlichungstag und Bekanntmachung des Hinweises auf die Patenterteilung: **25.07.2001**
(21) Anmeldenummer: 00108333.6
(22) Anmeldetag: 14.04.2000
(51) Int. Cl.: H04H 1/00

(54) **Verfahren zum Vorführen von Informationen, die in einem Computer gespeichert sind, insbesondere für Anwendung in einem bewegten Fahrzeug, wobei Zusatzinformationen über den digitalen Rundfunk übertragen werden**
Method for displaying information, which is stored in a computer, in particular for application in a moving vehicle, where supplementary information is transmitted via digital broadcast
Méthode pour l'affichage d'informations qui sont stockées dans un ordinateur, en particulier pour l'application dans une automobile, ou des informations supplémentaires sont transmises par transmission numérique

(30) Priorität: 16.04.1999 DE 19917402
(43) Veröffentlichungstag der Anmeldung: 18.10.2000
(60) Teilanmeldung: 01108435.7
(73) Patentinhaber: Trend Network AG, 40210 Düsseldorf (DE)
(72) Erfinder: Suhr, Steffen, D - 44791 Bochum (DE); Michael Möller, D - 40625 Düsseldorf (DE)
(74) Vertreter: Cohausz & Florack

(56) Entgegenhaltungen:
- WO-A-96/36141
- WO-A-96/42144
- WO-A-97/24581
- WO-A-97/43838
- DE-U- 29 708 460
- GB-A- 2 306 857
- FAZEL K ET AL: "MOBILE MULTIMEDIA SERVICES VIA DAB: DMB" GLOBAL TELECOMMUNICATIONS CONFERENCE (GLOBECOM),US,NEW YORK, IEEE, 3. November 1997 (1997-11-03), Seiten 1312-1317, XP000737741 ISBN: 0-7803-4199-6

## Beschreibung

Die Erfindung betrifft ein Verfahren zum Vorführen von Informationen, insbesondere in einem bewegten Fahrzeug, bei dem Stamminformationen auf einem Computer gespeichert werden, die danach auf mindestens einer Vorführvorrichtung vorgeführt werden, bei dem Zusatzinformationen mit Hilfe einer Sendevorrichtung und einer mit dem Computer verbundenen Empfangsvorrichtung auf den Computer übertragen werden, bei dem die Zusatzinformationen vom Computer ausgewertet werden und bei dem in Abhängigkeit von den Zusatzinformationen die auf der mindestens einen Vorführvorrichtung vorgeführten Informationen verändert werden.

Ein derartiges Verfahren wird bisher insbesondere in überregionalen Zügen eingesetzt, wobei die Vorführvorrichtungen als Computerbildschirme ausgebildet sind, auf denen die Stamminformationen einem Benutzer dargestellt werden. Die Stamminformationen werden an vorgegebenen Standorten wie bspw. in einem Betriebshof auf den Computer übertragen und bleiben bis zu einem nächsten Aufenthalt an einem derartigen Standort unverändert, da während der Fahrt zwischen zwei Betriebshöfen kein weiterer Datenaustausch stattfindet. Daher können mit den aus dem Stand der Technik bekannten Verfahren lediglich Informationen mit einer Aktualität vorgeführt werden, die an den Zeitpunkt der Übertragung der Stamminformationen geknüpft ist.

Im Stand der Technik ist weiterhin ein als Digital Multimedia Broadcasting (DMB) bezeichnetes Verfahren bekannt, bei dem auf der Basis von digitalem Hörfunk (Digital Audio Broadcasting - DAB) eine Bewegtbildübertragung in ein Schienenfahrzeug erfolgt, wodurch den Reisenden aktuelle Informationen vorgeführt werden. Sämtliche Informationen werden über den digitalen Hörfunk übertragen, so daß dieses Verfahren nicht auf in dem Fahrzeug abgespeicherte Stamminformationen zurückgreift. Daher ist zwar eine höhere Aktualität der vorgeführten Informationen möglich, jedoch ist der technische Aufwand für die Übertragung der Zusatzinformationen erheblich, da die gesamte Bandbreite eines Hörfunkkanals benötigt wird und somit erhebliche Kosten entstehen.

Weiterhin ist ein Verfahren bekannt, bei dem in Haltestellen von Bussen und U-Bahnen Informationen auf Bildschirmen oder Leinwänden vorgeführt werden. Dieses Verfahren nutzt bestehende Telefonverbindungen für die Übertragung der Daten aus, wodurch ein Vorführen auch aktueller Informationen möglich ist. Jedoch benötigt dieses Verfahren in jedem Fall eine direkte Datenverbindung, so daß es insbesondere bei bewegten Fahrzeugen nur über mobile Telefonverbindungen anwendbar ist. Die Kosten des Verfahrens sind daher erheblich.

Aus der DE 196 39 546 A1 ist ein Verfahren zur fahrzeuggebundenen Informationsübermittlung bekannt, das dazu ausgelegt ist, auf der Fahrtstrecke eines Fahrzeuges, wie bspw. eines öffentlichen Verkehrsmittels, ortsspezifische visuelle und/oder akustische Informationen bereit zu stellen, die am aktuellen Standort des Fahrzeugs stattfinden bzw. angeboten werden. Erreicht wird dies durch eine Verknüpfung abgespeicherter Werbeinformationen, die geographischen Daten zugeordnet sind, mit aktuellen Fahrzeug-Standortdaten, die bspw. über das GPS-System gewonnen werden. Zugunsten einer Aktualisierung der abgespeicherten Daten kann eine Daten-Funkfernübertragung vorgesehen sein, wobei fahrzeugseitig eine entsprechende Empfangsanlage vorhanden sein muß.

Aus der DE 296 15 782 U1 ist weiterhin ein Fahrgastinformationssystem für Schienenfahrzeuge bekannt, das eine Empfangseinrichtung zum Empfangen von unterschiedlichen Informationen enthaltenen Funksignalen und eine Informationsverarbeitungs- und Speichereinrichtung zum Auswerten der in den Funksignalen enthaltenen Informationen sowie zum Abspeichern dieser Informationen oder zum Erneuern entsprechender bereits abgespeicherter zugehöriger Informationen aufweist. Die Fahrgäste können selektiv die Informationsarten bestimmen, die in der Informationsverarbeitungs- und Speichereinrichtung gespeichert sind und selektiv dem Fahrgast angezeigt werden. Zur Datenübertragung wird eine telefonische Verbindung hergestellt, die insbesondere als Mobil-Telefonverbindung ausgebildet ist.

Die DE 43 10 216 A1 offenbart ein Verfahren zur Eingabe von Informationen in ein digitales Fahrgastinformationssystem, bei dem ein Datenaustausch mittels eines Schreib/Lesespeichers durchgeführt wird, der in einer Bearbeitungsstation eingebracht und dort mit gewünschten Informationen beschrieben wird und der anschließend in das digitale Fahrgastinformationssystem eingebracht und ausgelesen wird. Eine Übertragung der Daten findet somit über Datenspeichermedien statt.

Aus der DE 197 08 764 A1 ist weiterhin ein interaktives digitales Informations- und Unterhaltungssystem für Fahrzeuge bekannt, bei dem jeweils ein Fahrsitz ein Terminal des Informationssystems aufweist, wobei mindestens ein Bildschirm eines Terminals in die Rückenlehne des Fahrsitzes integriert ist, der sich in Sitzrichtung vor dem Fahrsitz, dem dieses Terminal zugeordnet ist. Ein Zentralrechner ist vorgesehen, der zum Datenaustausch mit einem externen stationären Rechner an einem Funkmodem angeschlossen ist. Mit Hilfe des Funkmodems können dem Zentralrechner nicht nur aktuelle Daten übermittelt werden, sondern es besteht darüber hinaus auch die Möglichkeit, daß ein Fahrgast über sein Terminal mit der Außenwelt kommuniziert und bspw. über das Internet elektronische Post erledigen kann. Daher sind die Funkmodems für den Aufbau einer Telefonverbindung ausgebildet. Darüber hinaus ist eine Funkempfangseinrichtung zum Empfang von Radio- und Fernsehprogrammen vorgesehen, so daß auf dem Terminal des Informationssystems auch Radio- und Fernsehprogrammen dargestellt werden können.

Schließlich offenbart die DE 44 14 626 A1 ein Verkehrsinformationssystem mit mindestens einer zentralen elektronischen Recheneinheit. Diese ist elektrisch oder funktechnisch zur Datenübertragung mit Soll- und Istwertquellen gekoppelt, wobei mit Hilfe von Abfrageeinheiten, die sich am Aufenthalts-/Tätigkeitsort des Benutzers des Verkehrsmittels befinden, abgefragt werden können. Die Abfrageeinheiten sind über Fernsprechapparate, die über das Telefonnetz oder ein Mobilfunknetz mit der zentralen elektronischen Recheneinheit gekoppelt sind, verbunden.

Ausgehend von diesem Stand der Technik liegt der vorliegenden Erfindung das technische Problem zugrunde, das Verfahren zum Vorführen von Informationen, insbesondere in einem bewegten Fahrzeug dahingehend zu verbessern, daß Informationen in hoher Qualität mit gleichzeitiger Aktualisierbarkeit und geringen Durchführungskosten vorgeführt werden können.

Das zuvor aufgezeigte technische Problem ist erfindungsgemäß dadurch gelöst, daß die Zusatzinformationen über Digital Multimedia Broadcasting (DMB) übertragen werden, wobei die Zusatzinformationen als Multimedia Object Transform Blöcke (MOT-Blöcke) im Datenbitstrom enthalten sind.

Dem erfindungsgemäßen Verfahren liegt die Erkenntnis zugrunde, das lediglich ein Teil der vorgeführten Informationen regelmäßig aktualisiert werden muß, während der weitaus größte Teil der Informationen eine ausreichende Aktualität besitzt, um als Stamminformationen auf dem Computer gespeichert zu sein. Daher können die Stamminformationen in größeren Datenmengen gespeichert sein, so daß zumindest der weitaus größte Teil der vorgeführten Informationen eine hohe Vorführqualität besitzt. Lediglich die zu aktualisierenden Informationen müssen als Zusatzinformationen mit Hilfe der Sendevorrichtung und der Empfangsvorrichtung auf den Computer übertragen werden. Diese Zusatzinformationen werden dann dazu verwendet, die vorgeführten Informationen zu verändern, insbesondere zu aktualisieren.

Erfindungsgemäß werden die Zusatzinformationen über Digital Multimedia Broadcasting (DMB) übertragen werden. Gemäß internationalen Standardisierungen des digitalen Hörfunks (Digital Audio Broadcasting, DAB) und des digitalen Fernsehfunks (Digital Video Broadcasting, DVB) weisen die ausgestrahlten Datenbitsequenzen erste Abschnitte mit Audio- und/oder Videodaten und zweite Abschnitte mit Zusatzdaten auf. Die zweiten Abschnitte werden auch als Program Associated Data (PAD) bzw. als Non Program Associated Data (NPAD) bezeichnet. Die zweiten Abschnitte der Datenbitsequenzen sind weiterhin in Blöcke mit vorgegebener Größe, vorzugsweise 8 kbit, unterteilt, mit denen die Zusatzdaten als Multimedia Object Transform (MOT)-Blöcke übertragen werden.

Erfindungsgemäß werden die Zusatzinformationen für das erfindungsgemäße Verfahren als MOT-Blöcke, die eine Teilsequenz der gesamten ausgestrahlten Datenbitsequenzen darstellen, auf das Fahrzeug übertragen. Der Computer selektiert dann aus dem gesamten Datenbitstrom die Teilsequenzen, also die MOT-Blöcke heraus, in denen die Zusatzinformationen enthalten sind.

Der Vorteil der Übertragung der Zusatzinformationen mit Hilfe von Digital Audio Broadcasting (DAB) oder Digital Video Broadcasting (DVB) liegt darin, daß dieser der digitale Hörfunk flächendeckend ausgestrahlt wird. Somit ist für die Durchführung des Verfahrens kein besonderes Netz von Sendern und Sendefrequenzen oder eine mobile Telefonverbindung zur Datenübertragung erforderlich. Außerdem müssen für die Durchführung des Verfahrens nur sehr geringe Teilsequenzen des gesamten Datenbitstromes für die Übertragung der Zusatzinformationen reserviert werden. Die Übertragung der Zusatzinformationen ist somit preisgünstig.

Das zuvor beschriebene Verfahren ist in bevorzugter Weise bei bewegten Fahrzeugen anwendbar, wobei insbesondere Schienenfahrzeuge und Busse des öffentlichen Personenverkehrs für eine Anwendung des Verfahrens geeignet sind. Darüber hinaus kann das Verfahren auch angewendet werden, um an festen Standorten, wie beispielsweise an Haltestellen, Bahnhöfen oder Flughäfen, die Informationen vorzuführen.

Als Stamminformationen dienen beispielsweise Kurzfilme, Videokunst, Computeranimation, Trickfilme sowie jegliche Form von Werbeinformationen. Als Zusatzinformationen können beispielsweise Haltestelleninformationen, Umsteigeund Anschlußinformationen, insbesondere auch für eine Vernetzung mit anderen öffentlichen oder privaten Verkehrsmitteln, Wetternachrichten, Nachrichtenschlagzeilen, Börseninformationen, Veranstaltungshinweise, Bürgerinformationen oder Touristikinformationen übertragen werden. Die Zusatzinformationen werden dann derart mit den Stamminformationen verbunden, daß in Abhängigkeit von den Zusatzinformationen die auf Vorführvorrichtungen dargestellten Informationen verändert, insbesondere aktualisiert werden.

Die Stamminformationen werden vorzugsweise mit Hilfe einer Datenleitung über Telefon, einem lokalen Netzwerk oder mittels Datenträgeraustausch auf den Computer übertragen. Das bedeutet für die Anwendung bei Fahrzeugen, daß die Stammdaten während des Aufenthaltes an vorgegebenen Standorten, wie bspw. Betriebshöfen, auf den Computer im Fahrzeug übertragen werden. Für stationäre Anwendungen werden die Stammdaten bspw. mittels einer Telefonverbindung auf dem Computer gespeichert, während die Zusatzinformationen - bspw. während der Fahrt - über die Sende- und Empfangsvorrichtungen übertragen werden.

In bevorzugter Weise werden mit Hilfe der Zusatzinformationen die Inhalte der vorgeführten Informationen verändert, so daß beispielsweise die Daten eines Wetterberichtes mit Hilfe der Zusatzinformationen aktualisiert werden, der während eines vorgegebenen Zeitablaufes der vorgeführten Informationen in regelmäßigen Abständen vorgeführt wird.

In besonders bevorzugter Weise weisen die Zusatzinformationen zumindest teilweise ausführbare Anweisungen auf, die mit Hilfe des Computers interpretiert werden können. Somit werden Steuerbefehle auf den Computer übertragen, um nicht nur den Inhalt, sondern auch die zeitliche Reihenfolge der vorgeführten Informationen zu verändern. Dadurch wird der zeitlichen Ablauf der vorgeführten Informationen, also das Programm selbst, beeinflusst, um beispielsweise eine aktuelle Nachrichtenschlagzeile einzufügen. Eine große Aktualität der vorgeführten Informationen wird somit erreicht, ohne daß die Informationen des gesamten Programmes übertragen werden müssen.

In weiter bevorzugter Weise werden die als Zusatzinformationen übertragenen ausführbaren Anweisungen dazu verwendet, um objektorientierte Informationen im Computer entsprechend der Anweisungen zusammenzuführen und für die Vorführung vorzubereiten. Beispielsweise können im Computer abgespeicherte Objekte, die als Symbole für die Darstellung eines Wetterberichtes verwendet werden, entsprechend der übertragenen Anweisungen vom Computer zusammengeführt und für eine Vorführung vorbereitet werden. Somit wird mit einem Minimum an Zusatzinformationen eine hohe Qualität der dargestellten Informationen, beispielsweise eine filmähnliche Bildersequenz eines Wetterberichtes, produziert. Dabei sind die objektorientierten Informationen vorzugsweise als Stamminformationen auf dem Computer gespeichert, jedoch können diese auch als Zusatzinformationen übertragen werden.

Die bisher angeführten Beispiele beziehen sich darauf, daß die Stamm- und Zusatzinformationen zu bildlichen Informationen verarbeitet werden. Darüber hinaus läßt sich das erfindungsgemäße Verfahren auch für akustische Informationen oder auch für eine Kombination von bildlichen und akustischen Informationen nutzen.

In einer weiteren bevorzugten Ausgestaltung der vorliegenden Erfindung ist der Computer mit einem geographischen Positionierungssystem, insbesondere einem Global Positioning System (GPS) verbunden, so daß der Computer die Zusatzinformationen in Abhängigkeit von der geographischen Position des Fahrzeuges auswertet. Beispielsweise können somit Umsteige- und Anschlußinformationen in Abhängigkeit von der nächsten Haltestelle des Fahrzeuges aus den übertragenen Zusatzinformationen herausselektiert werden. Dazu kann in weiter bevorzugter Weise auf ein bereits bestehendes Fahrgastinformationssystem zurückgegriffen werden.

Eine besonders bevorzugte Ausgestaltung der vorliegenden Erfindung, die auch selbständig erfinderischen Charakter hat, besteht darin, daß die mittels digitalisierter Funkwellen ausgestrahlten Datenbitsequenzen Teilsequenzen aufweisen, die ausführbare Anweisungsinformationen enthalten. Erfindungsgemäß ist erkannt worden, daß die bisher lediglich zur reinen Datenübertragung vorgesehenen MOT-Blöcke auch zur Übertragung von ausführbaren Anweisungen geeignet sind. Somit ist es beispielsweise mit Hilfe des Digital Audio Broadcasting (DAB) oder des Digital Video Broadcasting (DVB) möglich, Computer, die die digitalen Informationen des Hörfunks aufnehmen und auswerten, durch die Anweisungsinformationen zu steuern. Dazu wird eine vorgegebene Skriptsprache verwendet, die vom Computer interpretiert, insbesondere laufzeitinterpretiert werden kann. Dieses kann auch als Real-Time-Steuerung bezeichnet werden.

In bevorzugter Weise wird das zuvor beschriebene Verfahren zum Übertragen von mit Hilfe eines Computers ausführbaren Anweisungsinformationen bei den oben beschriebenen Verfahren zum Vorführen von Informationen in einem bewegten Fahrzeug dazu verwendet, die ausführbaren Anweisungsinformationen, die im Datenbitstrom der digitalisierten Funkwellen enthalten sind, als Zusatzinformationen für die Beeinflussung der vorgeführten Informationen zu verwenden.

Die zuvor beschriebenen Verfahren sind unabhängig davon, in welcher Weise der Digital Multimedia Broadcasting (DMB) auf die Empfangsvorrichtung übertragen wird. So wird Digital Audio Broadcasting (DAB) und Digital Video Broadcasting (DVB) sowohl terrestrisch als auch via Satellit ausgestrahlt. Dementsprechend sind dann die Empfangsvorrichtungen entweder als terrestrische Antennen oder als Satellitenantennen ausgebildet. Insbesondere bei bewegten Fahrzeugen ist bei der Verwendung von Satellitenantennen dafür Sorge zu tragen, daß diese immer auf den ausstrahlenden Satelliten ausgerichtet sind. Derartige Satellitenempfänger sind jedoch bereits aus dem Stand der Technik bekannt und können somit auch bei bewegten Fahrzeugen wie Bussen oder Bahnen eingesetzt werden.

Darüber hinaus kann der Digital Multimedia Broadcasting (DMB) mit einer Frequenz im Ultra High Freqency (UHF) Bereich, Mikrowellenbereich oder im Radarwellenbereich übertragen werden. Letztere beiden Techniken werden zukünftig verbreitet eingesetzt werden, wobei die Datenübertragungsraten gegenüber dem UHF-Bereich deutlich erhöht werden.

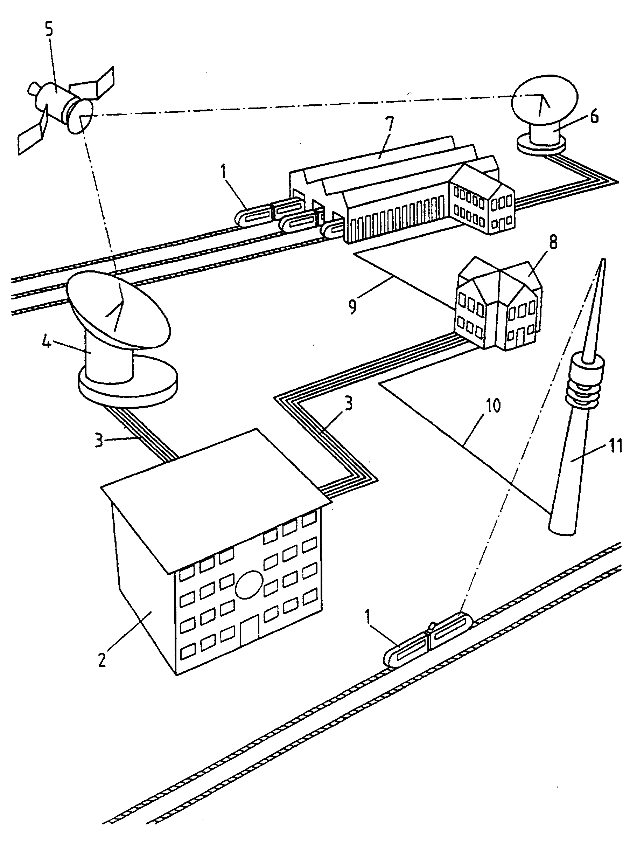

Im folgenden wird die Erfindung anhand eines Ausführungsbeispieles näher erläutert, wobei auf die beigefügte Zeichnung Bezug genommen wird. In der Zeichnung zeigt die einzige Figur ein Ausführungsbeispiel des erfindungsgemäßen Verfahrens zum Vorführen von Informationen in einem Schienenfahrzeug in einer schematischen perspektivischen Darstellung.

In einem Sendestudio 2 findet eine sogenannte Offline-Produktion statt, bei der alle Grundlagen für ein Programm einer vorgegebenen Zeiteinheit, beispielsweise ein tägliches Programm in Form von einzelnen Filmen erstellt. Vom Sendestudio 2 werden die vorgeplanten Informationen, beispielsweise Filmbeiträge, die Informationen aus Wirtschaft und Handel oder Werbeinformationen enthalten, über ein Intranet 3 an einen Sender 4 weitergegeben. Der Sender 4 überträgt die Informationen über einen Satelliten 5 und einen Empfänger 6 auf mindestens einen Betriebshof 7 des Betreibers der Schienenfahrzeuge 1. Im Betriebshof 7 werden die vom Sendestudio 2 empfangenen Informationen als Stamminformationen auf den im Schienenfahrzeug 1 angeordneten Computer (nicht dargestellt) übertragen. Somit findet eine Aktualisierung der Stamminformationen auf dem Computer während des Aufenthaltes des Schienenfahrzeuges 1 im Betriebshof 7 statt. Die Datenübertragung kann dabei mit Hilfe einer Datenleitung, einem lokalen Netzwerk oder mittels Datenträgeraustausch auf den Computer erfolgen.

Nachdem das Schienenfahrzeug 1 den Betriebshof 7 verlassen hat, werden die Stamminformationen auf Bildschirmgeräten (nicht dargestellt), die als Vorführvorrichtungen dienen, in einer vorprogrammierten Reihenfolge vorgeführt.

In einem zweiten Sendestudio 8, das im Ausführungsbeispiel getrennt vom ersten Sendestudio 2 ist und über das Intranet ebenfalls die Stamminformationen vom ersten Sendestudio 2 erhält, werden aktuelle Informationen gesammelt und in Form von Graphikobjekten, Texten und Skripten zusammengestellt. Dazu werden zum einen allgemeine Informationen in Form von Nachrichten aus Politik und Handel sowie Wetterprognosen gesammelt. Zum anderen werden aktuelle Meldungen von dem Betriebshof 7 bzw. von allen Betriebshöfen 7 des Betreibers über ein Intranet 9 übertragen. Diese Meldungen beziehen sich bspw. auf Fahrplaninformationen, die insbesondere Verspätungsmeldungen von Schienenfahrzeugen 1 des Betreibers beinhalten können.

Die zusammengefaßten aktuellen Informationen werden vom Sendestudio 8 über ein Intranet 10 auf einen Sender 11 übertragen. Von diesem werden die aktuellen Informationen als Zusatzinformationen auf die Schienenfahrzeuge 1 insbesondere dann übertragen, wenn sie unterwegs sind, also sich außerhalb der Betriebshöfe 7 befinden.

Im dargestellten Ausführungsbeispiel werden die Zusatzdaten über digitalen Hörfunk, Digital Audio Broadcasting (DAB), vom Sender 11 auf das Schienenfahrzeug 1 übertragen. Dabei werden die im folgenden beschriebenen Eigenschaften des digitalen Rundfunks ausgenutzt.

Die Zusatzinformationen werden zunächst auf einem Produktionsrechner im Betriebshof 7 der Online-Produktion als Graphiken, Bilder, Texte und/oder Skripte erzeugt. Diese werden in einer für die DAB-Ausstrahlung geeignete Form konvertiert und kodiert, so daß die Zusatzinformationen als Multimedia Object Transfer (MOT)-Daten an einen DAB-Multiplexer weitergegeben werden. Der DAB-Multiplexer fügt unter anderem die Zusatzinformationen zu einem DAB-Ensemble zusammen, das an den Sender 11 übertragen wird. Von diesem wird der digitale DAB-Datenstrom als terrestrische Übertragung ausgestrahlt. Um dabei auch eine Übertragung innerhalb von Tunneln, insbesondere auch im Falle von U-Bahnen zu gewährleisten, wird der digitale DAB-Datenstrom gegebenenfalls auch über spezielle Übertrager (Repeater) in die Tunnel weitergeleitet.

Der im Schienenfahrzeug 1 eingebaute Empfänger (nicht dargestellt) empfängt die ausgestrahlten Daten des digitalen Rundfunks. Der Computer, der mit dem Empfänger verbunden ist, speichert den DAB-Datenstrom zwischen und analysiert diesen, um die im DAB-Datenstrom enthaltenen MOT-Daten herauszufiltern. Die MOT-Daten werden anschließend in die ursprünglichen Graphiken, Bilder, Texte und Skripte als Zusatzinformationen dekodiert.

Sofern es sich bei den Zusatzinformationen um Graphiken, Bilder oder Texte handelt, werden diese vom Computer an gegebenenfalls vorgegebenen Positionen in das laufende Programm eingefügt. Dabei kann es sich beispielsweise um aktuelle Nachrichten oder um Fahrgastinformationen handeln.

Die Zusatzinformationen, die in Form von MOT-Daten übertragen worden sind, können auch Skripte in einer vorgegebenen Skriptsprache enthalten, die vom Computer interpretiert, insbesondere auch laufzeitinterpretiert werden können. Somit erhält der Computer über den digitalen Rundfunk Steuerbefehle, um aktiv den Ablauf des Programmes der vorgeführten Informationen zu beeinflussen.

Zum einen kann eine derartige Beeinflussung beispielsweise darin bestehen, ein Graphik-, Film- oder Textobjekt aus dem Programm herauszunehmen oder in dieses einzufügen, so daß die zeitliche Reihenfolge der vorgeführten Informationen verändert wird. Zum anderen können die ausführbaren Anweisungen vom Computer derart interpretiert werden, daß als Stamminformationen gespeicherte Graphik-, Film- und/oder Textobjekte miteinander kombiniert werden, wie im folgenden anhand des Beispieles eines aktualisierten Wetterberichtes beschrieben wird.

Für die bildliche Darstellung eines Wetterberichtes ist eine begrenzte Anzahl von Symbolen wie beispielsweise eine Sonne, Wolken oder Temperaturangaben sowie Landkarten zur geographischen Anordnung der Symbole erforderlich. Sind diese verschiedenen Symbole als Objekte in den Stamminformationen im Computer abgespeichert, so können mit den ausführbaren Anweisungen, die als Zusatzinformationen übertragen worden sind, die verschiedenen Objekte so zusammengestellt werden, das filmähnlicher aktualisierter Wetterbericht mit festen und/oder sich bewegenden Symbolen für eine bestimmte Region auf den Bildschirmen im Schienenfahrzeug 1 dargestellt wird. Der zuletzt beschriebene Vorgang kann auch als objektorientierte Steuerung des Vorführens von Informationen in einem bewegten Fahrzeug bezeichnet werden.

## Patentansprüche

1. Verfahren zum Vorführen von Informationen,
- bei dem Stamminformationen auf einem Computer gespeichert werden, die danach auf mindestens einer Vorführvorrichtung vorgeführt werden,
- bei dem Zusatzinformationen mit Hilfe einer Sendevorrichtung und einer mit dem Computer verbundenen Empfangsvorrichtung auf den Computer übertragen werden,
- bei dem die Zusatzinformationen vom Computer ausgewertet werden und
- bei dem in Abhängigkeit von den Zusatzinformationen die auf der mindestens einen Vorführvorrichtung vorgeführten Informationen verändert werden,
**dadurch gekennzeichnet,**
daß die Zusatzinformationen über Digital Multimedia Broadcasting (DMB) übertragen werden, wobei die Zusatzinformationen als Multimedia Object Transform Blöcke (MOT-Blöcke) im Datenbitstrom enthalten sind.

2. Verfahren nach Anspruch 1, dadurch gekennzeichnet, daß die Zusatzinformationen mittels Digital Audio Broadcasting (DAB) übertragen werden.

3. Verfahren nach Anspruch 1, dadurch gekennzeichnet, daß die Zusatzinformationen mittels Digital Video Broadcasting (DVB) übertragen werden.

4. Verfahren nach einem der Ansprüche 1 bis 3, bei dem die Informationen in einem bewegten Fahrzeug vorgeführt werden und der Computer und die mindestens eine Vorführvorrichtung in dem Fahrzeug angeordnet werden.

5. Verfahren nach einem der Ansprüche 1 bis 4, bei dem die Stamminformationen mit Hilfe einer Datenleitung, einem lokalen Netzwerk oder mittels Datenträgeraustausch auf den Computer übertragen werden.

6. Verfahren nach einem der Ansprüche 1 bis 5, bei dem mit Hilfe der Zusatzinformationen die Inhalte der vorgeführten Informationen verändert werden.

7. Verfahren nach einem der Ansprüche 1 bis 6, bei dem die Zusatzinformationen zumindest teilweise ausführbare Anweisungen aufweisen, die mit Hilfe des Computers interpretiert werden.

8. Verfahren nach Anspruch 7, bei dem mit Hilfe der Zusatzinformationen die zeitliche Reihenfolge der vorgeführten Informationen verändert wird.

9. Verfahren nach Anspruch 7 oder 8, bei dem mit Hilfe der Zusatzinformationen objektorientierte Informationen zusammengefügt werden.

10. Verfahren nach Anspruch 9, bei dem die objektorientierten Informationen als Stamminformationen und/oder als Zusatzinformationen auf den Computer übertragen werden.

11. Verfahren nach einem der Ansprüche 1 bis 10, bei dem die Stamminformationen und Zusatzinformationen bildliche und/oder akustische Informationen sind.

12. Verfahren nach einem der Ansprüche 1 bis 11, bei dem der Computer mit einem geographischen Positionierungssystem verbunden ist und bei dem die Zusatzinformationen in Abhängigkeit von der geographischen Position des Fahrzeuges vom Computer ausgewertet werden.

13. Verfahren nach einem der Ansprüche 1 bis 12, dadurch gekennzeichnet, daß der Digital Multimedia Broadcasting (DMB) terrestrisch ausgestrahlt wird.

14. Verfahren nach einem der Ansprüche 1 bis 12, dadurch gekennzeichnet, daß der Digital Multimedia Broadcasting (DMB) via Satellit ausgestrahlt wird und die Empfangsvorrichtung als Satellitenempfänger ausgebildet ist.

15. Verfahren nach einem der Ansprüche 1 bis 14, dadurch gekennzeichnet, daß der Digital Multimedia Broadcasting (DMB) mit einer Frequenz im Ultra High Frequency (UHF) Bereich, im Mikrowellenbereich oder im Radarwellenbereich übertragen wird.

## Claims

1. A process for presenting information,
- in which master information is stored on a computer and is then presented on at least one presentation device,
- in which additional information is transferred to the computer with the aid of a transmitting device and a receiving device which is connected to the computer,
- in which the additional information is evaluated by the computer and
- in which, in dependence on the additional information, the information presented on the at least one presentation device is altered, characterised in that the additional information is transferred by way of Digital Multimedia Broadcasting (DMB), with the additional information being contained in the flow of data bits as Multimedia Object Transform blocks (MOT blocks).

2. A process according to Claim 1, characterised in that the additional information is transferred by means of Digital Audio Broadcasting (DAB).

3. A process according to Claim 1, characterised in that the additional information is Transferred by means of Digital Video Broadcasting (DVB).

4. A process according to one of Claims 1 to 3, in which the information is presented in a moving vehicle and the computer and the at least one presentation device are arranged in the vehicle.

5. A process according to one of Claims 1 to 4, in which the master information is transferred to the computer with the aid of a data line or a local network or by means of data carrier exchange.

6. A process according to one of Claims 1 to 5, in which the contents of the presented information are altered with the aid of the additional information.

7. A process according to one of Claims 1 to 6, in which the additional information has instructions which are at least in part executable and are interpreted with the aid of the computer.

8. A process according to Claim 7, in which the order in time of the presented information is altered with the aid of the additional information.

9. A process according to Claim 7 or 8, in which object-oriented information is brought together with the aid of the additional information.

10. A process according to Claim 9, in which the object-oriented-information is transferred to the computer as master information and/or as additional information.

11. A process according to one of Claims 1 to 10, in which the master information and additional information are image and/or acoustic information.

12. A process according to one of Claims 1 to 11, in which the computer is connected to a geographical positioning system, and in which the additional information is evaluated by the computer in dependence on the geographical position of the vehicle.

13. A process according to one of Claims 1 to 12, characterised in that the Digital Multimedia Broadcasting (DMB) is emitted terrestrially.

14. A process according to one of Claims 1 to 12, characterised in that the Digital Multimedia Broadcasting (DMB) is emitted via satellite and the receiving device is constructed as a satellite receiver.

15. A process according to one of Claims 1 to 14, characterised in that the Digital Multimedia Broadcasting (DMB) is transmitted at a frequency which is in the Ultra High Frequency (UHF) range, the microwave range or the radar wave range.

## Revendications

1. Méthode pour l'affichage d'informations,
- dans laquelle des informations de base sont stockées dans un ordinateur, lesquelles informations sont ensuite affichées sur au moins un dispositif d'affichage,
- dans laquelle des informations supplémentaires sont transmises à l'ordinateur à l'aide d'un dispositif d'émission et d'un dispositif de réception relié à l'ordinateur,
- dans laquelle les informations supplémentaires sont évaluées par l'ordinateur, et
- dans laquelle, en fonction des informations supplémentaires, les informations affichées sur ledit au moins un dispositif d'affichage sont modifiées,
caractérisée en ce que
les informations supplémentaires sont transmises par Digital Multimedia Broadcasting (DMB), les informations supplémentaires étant comprises comme des blocs Multimedia Object Transform (blocs MOT) dans le flux de bits d'information.

2. Méthode selon la revendication 1, caractérisée en ce que les informations supplémentaires sont transmises par Digital Audio Broadcasting (DAB).

3. Méthode selon la revendication 1, caractérisée én ce que les informations supplémentaires sont transmises par Digital Video Broadcasting (DVB).

4. Méthode selon une des revendications 1 à 3, dans laquelle les informations sont affichées dans un véhicule en mouvement et l'ordinateur et ledit au moins un dispositif d'affichage sont disposés dans le véhicule.

5. Méthode selon une des revendications 1 à 4, dans laquelle les informations de base sont transmises à l'ordinateur à l'aide d'une ligne de données, d'un réseau local ou au moyen d'un échange de supports de données.

6. Méthode selon une des revendications 1 à 5, dans laquelle les contenus des informations affichées sont modifiés à l'aide des informations supplémentaires.

7. Méthode selon une des revendications 1 à 6, dans laquelle les informations supplémentaires présentent au moins en partie des instructions exécutables qui sont interprétées à l'aide de l'ordinateur.

8. Méthode selon la revendication 7, dans laquelle l'ordre chronologique des informations affichées est modifié à l'aide des informations supplémentaires.

9. Méthode selon la revendication 7 ou 8, dans laquelle les informations orientées objet sont assemblées à l'aide des informations supplémentaires.

10. Méthode selon la revendication 9, dans laquelle les informations orientées objet sont transmises comme informations de base et / ou comme informations supplémentaires à l'ordinateur.

11. Méthode selon une des revendications 1 à 10, dans laquelle les informations de base et les informations supplémentaires sont des informations vidéo et / ou audio.

12. Méthode selon une des revendications 1 à 11, dans laquelle l'ordinateur est relié à un système de positionnement géographique et dans laquelle les informations supplémentaires sont évaluées par l'ordinateur en fonction de la position géographique du véhicule.

13. Méthode selon une des revendications 1 à 12,
caractérisée en ce que le Digital Multimedia Broadcasting (DMB) est émis par voie terrestre.

14. Méthode selon une des revendications 1 à 12,
caractérisée en ce que le Digital Multimedia Broadcasting (DMB) est émis par satellite et le dispositif de réception est conformé comme un récepteur satellite.

15. Méthode selon une des revendications 1 à 14,
caractérisée en ce que le Digital Multimedia Broadcasting (DMB) est transmis à une fréquence dans la plage des ultra-hautes fréquences (UHF), dans la plage des micro-ondes ou dans la plage des ondes radar.
